# EUROPÄISCHE PATENTANMELDUNG

(11) **EP 4 576 277 A1**
(43) Veröffentlichungstag der Anmeldung: **25.06.2025**
(21) Anmeldenummer: 23219669.1
(22) Anmeldetag: 22.12.2023
(51) Int. Cl.: H01M 4/86, H01M 4/92, H01M 8/1004, H01M 8/102, H01M 8/1032, H01M 8/1018

(54) **PLATIN-LEGIERUNGEN IN DER ANODENSCHICHT VON BRENNSTOFFZELLEN MIT FLUORFREIEN KOHLENWASSERSTOFF-IONOMEREN**

(71) Anmelder: ionysis GmbH, 79110 Freiburg (DE)
(72) Erfinder: NGUYEN, Hien, 103 79110 Freiburg (DE); BREITWIESER, Matthias, 103 79110 Freiburg (DE)
(74) Vertreter: Hertin und Partner Rechts- und Patentanwälte PartG mbB

(57) **Zusammenfassung**

Die Erfindung betrifft eine Brennstoffzelle. Die Brennstoffzelle umfasst eine Anode, eine Kathode und eine Polymermembran, die sich zwischen der Anode und der Kathode befindet. Die Anode umfasst ein katalytisch aktives Material, ein Trägermaterial und einen Polymerbinder. Mittels des Polymerbinders wird das katalytisch aktive Material mit dem Trägermaterial verbunden. Die Brennstoffzelle zeichnet sich dadurch aus, dass das katalytisch aktive Material eine Platin-M-Legierung umfasst, wobei M ein oder mehrere Übergangsmetalle bezeichnet und der Polymerbinder auf Kohlenwasserstoff-Ionomeren basiert.

## Beschreibung

Die Erfindung betrifft eine Brennstoffzelle. Die Brennstoffzelle umfasst eine Anode, eine Kathode und eine Polymermembran, die sich zwischen der Anode und der Kathode befindet. Die Anode umfasst ein katalytisch aktives Material, ein Trägermaterial und einen Polymerbinder. Mittels des Polymerbinders wird das katalytisch aktive Material mit dem Trägermaterial verbunden. Die Brennstoffzelle zeichnet sich dadurch aus, dass das katalytisch aktive Material eine Platin-M-Legierung umfasst, wobei M ein oder mehrere Übergangsmetalle bezeichnet und der Polymerbinder auf Kohlenwasserstoff-Ionomeren basiert.

### Hintergrund und Stand der Technik

Seit der Erkenntnis des Zusammenhangs zwischen CO₂-Emissionen und Klimawandel in den achtziger Jahren wurde dem Einsatz von effizienten, klimafreundlichen und umweltschonenden Energieerzeugern eine signifikante Rolle zugeordnet. Insbesondere der Brennstoffzellentechnologie wird auf dem Gebiet der effizienten Energiebereitstellung ein großes Potential vorhergesagt. Dabei bezeichnen Brennstoffzellen elektrochemische Energiewandler, die chemische Energie direkt in elektrischen Strom umwandeln.

Im Stand der Technik liegen mehrere Ansätze zum Aufbau und zur Funktionsweise von Brennstoffzellen vor. Ein Beispiel eines weitverbreiteten Ansatzes für die Brennstoffzelle ist die sogenannte Polymerelektrolyt-Brennstoffzelle oder auch Protonenaustauschmembran-Brennstoffzelle (abgekürzt mit PEFC oder PEMFC für die englischen Ausdrücke *Polymer Electrolyte Fuel Cell* oder *Proton Exchange Membrane Fuel Cell*)*.* Bei einer PEMFC ist die entscheidende Komponente die Polymermembran, welche zwischen der Elektrode und Anode angebracht ist. Die Polymermembran ist typischerweise beidseitig mit einem katalytisch aktiven Material beschichtet und wirkt als Separator für die gasförmigen Reaktanden, beispielsweise Luft bzw. Sauerstoff und Wasserstoff.

Die Polymermembran kann auch als Elektrolyt fungieren. So kann der Elektrolyt in Membranbrennstoffzellen beispielsweise aus einer festen Kationenaustauschmembran, d. h. aus einer protonenleitenden Folie auf der Basis eines perfluorierten, sulfonierten Polymers bestehen. Bei der PEMFC übernimmt die Membran gleichzeitig die Funktion des Elektrolyten, des Katalysatorträgers für die anodischen und kathodischen Elektrokatalysatoren und wirkt als Separator für die gasförmigen Reaktanden. Vorteile sind hier die unkomplizierte Handhabung des Festelektrolyten, das geringe Gewicht und die hohe Leistungsdichte aufgrund der guten Protonenleitfähigkeit des Elektrolyten. Eine beidseitig mit einem Katalysatormaterial beschichtete Membran wird auch als CCM (englisch: *catalyst-coated membrane*) oder auch als Membran-Elektroden-Einheit (MEA, englisch: *membrane-electrode assembly*) bezeichnet.

Die Membran ist selektiv durchlässig, im Falle von Protonenaustauschmembran (englisch: *proton exchange membrane,* abgekürzt mit PEM) für positive Ladungen (Kationen), z. B. für Protonen. In den Elektrodenschichten finden die elektrochemischen Reaktionen statt. Der Brennstoff, z. B. Wasserstoff, wird an der Anode katalytisch unter Abgabe von Elektronen zu Kationen oxidiert. Diese gelangen durch die CCM. Die Elektronen werden aus der Brennstoffzelle abgeleitet und fließen über einen elektrischen Verbraucher. An der Kathode wird das Oxidationsmittel, z. B. Sauerstoff oder Luft, durch Aufnahme der Elektronen zu Anionen reduziert, die unmittelbar mit den Wasserstoffionen zu Wasser reagieren. Wasserstoff wird auf der Anode zu Protonen und Elektronen oxidiert. Es wird deutlich, dass der Ausgestaltung der Polymermembran, der Kathode und der Anode als strukturelle Komponenten der Brennstoffzelle eine besondere Bedeutung beizumessen ist.

Insbesondere für den Aufbau der Anode liegen im Stand der Technik mehrere Vorschläge vor. In der WO 2014/122427 A1 wird beschrieben, dass eine Anode eine binäre Legierung umfasst. Die binäre Legierung umfasst Platin als einen ersten Legierungspartner. Der zweite Legierungspartner wird ausgewählt aus einer Gruppe bestehend aus Niob und Tantal. Platin weist in der Legierung einen Anteil von 45 - 85 Molprozent auf. Ferner umfasst die Anode ein Trägermaterial, auf dem die Legierung dispergiert vorliegt. Weiterhin wird für das Platin eine Flächenbeladung von 0,01 - 0,2 mg/cm² angegeben.

In der US 6,066,410 wird offenbart, dass die Anode eine Platin-Ruthenium-Legierung umfasst, die fein dispergiert als Partikel auf einem pulverförmigen, elektrisch leitfähigen Trägermaterial vorliegt. Die Partikel der Platin-Ruthenium-Legierung weisen Ausmaße von durchschnittlich 0,5 - 2 nm auf. Die Platin-Ruthenium-Legierung wird auf ein hydrophobes, elektrisch leitfähiges Substrat aufgebracht.

WO 2014/079462 A1 schlägt vor, für eine der Elektroden einer Brennstoffzelle eine binäre Legierung einzusetzen, die ein Edelmetall aufweist und ausgewählt ist aus einer Gruppe bestehend aus Palladium und Platin. Ferner soll die binäre Legierung ein Erdalkalimetall enthalten. Die Legierung ist auf einem Trägermaterial angebracht. Weiterhin liegt das Verhältnis zwischen dem Edelmetall und dem Erdalkalimetall in einem Bereich von 1,5:1 bis 10:1 in Molprozent.

In der US 7642217 B2 wird ebenfalls beschrieben, eine Platin/Ruthenium-Legierung als Katalysator zu verwenden. Die Legierung wird zusammen mit einem lonomer, z. B. Nation, und einem weiteren Medium, z. B. Isopropylalkohol, Tetrabutylacetat und n-Butylaetat kombiniert, um ein Gemisch zu erhalten. Dieses Gemisch wird auf eine Gasdiffusionsschicht aufgebracht. Diese Kombination wird als Anode verwandt.

US 2006/0280997 A1 offenbart eine Anode, die eine Platin-Nickel-Legierung als Katalysator umfasst. Die Platin-Nickel-Legierung wird ebenfalls durch Nanopartikel gebildet, die auf einem elektrisch leitfähigen Trägermaterial aufgebracht vorliegen. Die Anode kann durch einen mikrowellenunterstützten Polyol-Prozess oder durch einen Hitze-Transfer-Prozess synthetisiert werden.

Die obig aufgeführten Brennstoffzellen weisen Komponenten auf, die mindestens Anteile von Fluor enthalten, beispielsweise in der Polymermembran oder als Polymerbinder, um ein katalytisch aktives Material an das Trägermaterial zu binden. Ein bekanntes Beispiel hierfür ist Nation oder generell PFSA-basierte Komponenten (PFSA ist die Abkürzung von Perfluorsulfonsäure, englisch: *perfluorosulfonic acid*)*.* PFSA-basierte Komponenten oder Materialien weisen jedoch einige Nachteile auf. Perfluorierte Chemikalien, zu denen auch PFSAs gehören, gelten als besonders bioakkumulativ, da sie resistent gegen thermischen, chemischen und/oder mikrobiologischem Abbau sind. Perfluorierte Chemikalien reichern sich daher entlang der Nahrungskette in Pflanzen und Tieren bis zum Menschen an. Im Gegensatz zu anderen organischen Kontaminanten binden sich organische Fluorverbindungen an Serumproteine.

Perfluorierte Säuren sind giftig für die Leber, können kanzerogen sowie reproduktionstoxisch sein und könnten zu Entwicklungsstörungen führen. Im menschlichen Organismus haben sie eine Verweilzeit von bis zu neun Jahren. Aus diesen Gründen sollte die Freisetzung von perfluorierten Chemikalien in die Umwelt weitestgehend verhindert und der Einsatz minimiert werden.

Hinzu kommt, dass es momentan nur sehr wenige Anbieter für PFSA-basierte Komponenten gibt. Die derzeitigen Anbieter verbreiten PFSA-basierte Materialien zu hohen Kosten. Das bekannteste PFSA-basierte lonomer ist Nation (eingetragene Marke der Firma Chemours). Werden zusätzlich die Kosten für das Katalysatormaterial der Katalysatorschicht berücksichtigt, wie z. B. für Platin, wird deutlich, dass ein erheblicher wirtschaftlicher Nachteil derzeit vorliegt, was sich auch nachteilig für eine massenhafte Anwendung auswirkt.

Darüber hinaus stellen PFSA-basierte Komponenten aus technischer Sicht einige Herausforderungen dar. PFSA-basierte Materialien gehen mit aufwendigen Synthesen einher, sodass diese nur kosten- und zeitsensitiv bereitgestellt werden können. Darüber hinaus sind sie nur bei einer sehr begrenzten Betriebstemperatur funktionstauglich (bis etwa 120°C). Weiterhin weisen PFSA-basierte Polymermembranen eine hohe Permeabilität gegenüber Reaktanden, wie z. B. Wasserstoff und/oder Sauerstoff, auf, was zu Ineffizienzen und Ausfällen führen könnte.

Daher liegt im Stand der Technik das Bestreben vor, auf PFSA-basierte Polymermembranen und lonomere zu verzichten und auf alternative Materialien zurückzugreifen. Diesbezüglich wird Kohlenwasserstoff-basierten Polymermembranen ein großes Potential zugerechnet, da Polymere auf Kohlenwasserstoff-Basis typischerweise einen effizienteren Zellbetrieb erlauben, höhere Betriebstemperaturen ermöglichen, eine bessere Umweltverträglichkeit aufweisen und perspektivisch kostengünstiger sein können als perfluorierte Polymere.

In Nguyen et al. (2021) wird eine fluorfreie CCM auf Kohlenwasserstoffbasis vorgestellt, deren Anode einen Pt/C Katalysator in einer Pemion^{™} Lösung umfasst, wobei Platin Pt als katalytisch aktives Material und Kohlenstoff C als Trägermaterial fungiert. Darüber hinaus weist die Kathode der in Nguyen et al. (2021) untersuchten Brennstoffzelle eine Platin-Cobalt-Legierung als katalytisch aktives Material auf Kohlenstoff als Trägermaterial auf. Als Polymerbinder wird hierbei Pemion^{™} eingesetzt.

Nguyen et al. (2021) schlägt somit bereits eine CCM auf Kohlenwasserstoffbasis vor, welche vorteilhaft auf den Einsatz gesundheitsgefährdender perfluorierter Säuren verzichten kann. In Bezug auf die Leistungsfähigkeit der auf Kohlenwasserstoff-basierten CCM besteht jedoch ein Verbesserungspotential. Insbesondere bei trockenen Betriebsbedingungen mit reduzierter externer Befeuchtung kann es zu Leistungseinbußen kommen. Teilweise kann dies darauf zurückgeführt werden, dass das aromatische Rückgrat in der Struktur mancher der eingesetzten kohlenwasserstoffbasierten lonomere die katalytische Aktivität von Platin im Vergleich zu PFSA-basierten Membran-Elektroden-Einheiten (MEAs) verringert. Letzteres kann unter anderem einer der Gründe sein, dass die Leistung, wie sie von PFSA mit Kohlenwasserstoff-basierten MEAs erreicht werden kann, mit der durch in Nguyen et al. (2021) vorgeschlagene Ausgestaltung der Kathode nicht erreicht werden konnte, insbesondere bei trockenen Bedingungen bzw. geringer Feuchtigkeit. Es besteht somit Potential, den Aufbau der Brennstoffzelle weiter zu verbessern.

### Aufgabe der Erfindung

Aufgabe der Erfindung ist es, die Nachteile des Standes der Technik zu beseitigen. Insbesondere ist es eine Aufgabe der Erfindung, eine Brennstoffzelle zu bieten, welche einerseits auf die Verwendung gesundheitsgefährdender Substanzen verzichten kann und andererseits sich durch eine hohe Leistungsfähigkeit auszeichnet, vorzugsweise auch im Betrieb bei geringer Feuchte.

### Zusammenfassung der Erfindung

Die erfindungsgemäße Aufgabe wird gelöst durch die unabhängigen Ansprüche. Vorteilhafte Ausgestaltungen der Erfindung sind in den abhängigen Ansprüchen offenbart.

Die Erfindung betrifft eine Brennstoffzelle umfassend eine Anode, eine Kathode und eine Polymermembran, die sich zwischen der Anode und der Kathode befindet, wobei die Anode ein katalytisch aktives Material, ein Trägermaterial und einen Polymerbinder umfasst, wobei mittels des Polymerbinders das katalytisch aktive Material mit dem Trägermaterial verbunden ist, dadurch gekennzeichnet, dass das katalytisch aktive Material eine Platin-M-Legierung umfasst, wobei M ein oder mehrere Übergangsmetalle bezeichnet und der Polymerbinder auf Kohlenwasserstoff-Ionomeren basiert.

Die erfindungsgemäße Brennstoffzelle zeichnet sich durch eine Reihe von Vorteilen auf, insbesondere gegenüber Brennstoffzellen des Standes der Technik, welche PFSA-basierte Komponenten einsetzen. So kann vorteilhafterweise auf eine Verwendung potentiell toxischer perfluorierter Chemikalien verzichtet werden, wie dies bei PFSA-basierten Komponenten bzw. Materialien der Fall ist.

Im Vergleich zu bekannten fluorfreien Brennstoffzellen, wie diese beispielsweise in Nguyen et al. (2021) vorgestellt wurden, können zudem insbesondere durch die Verwendung einer Platin-Übergangsmetall-Legierung als katalytisch aktives Material einer Anode weitergehende Vorteile erzielt werden.

Insbesondere können durch den Einsatz einer Platin-Übergangsmetall-Legierung als katalytisches Material in der Anode (anstelle von Platin) höhere Leistungen, insbesondere auch bei einem Betrieb mit geringer Feuchte, generiert werden. Der Umsatz zu Wasser innerhalb der Brennstoffzelle bestimmt die Feuchtigkeit und korreliert wiederrum mit der Leistung der Brennstoffzelle. Eine hinreichende Feuchtigkeit ist maßgeblich, um eine hinreichende elektrische Leitfähigkeit beizubehalten und den elektrischen Strom, der während des Betriebes entsteht, nutzen zu können. Vorteilhaft wurde festgestellt, dass durch die erfindungsgemäße Ausgestaltung der Anode auch bei geringer Feuchtigkeit die protonische Leitfähigkeit der Anode sichergestellt werden kann. Dies kann, ohne auf die Theorie beschränkt zu sein, mit der verbesserten Kinetik, die innerhalb der Brennstoffzelle resultiert, verknüpft sein. Die Kinetik bezeichnet bevorzugt die Ausbeute und/oder die Reaktionsgeschwindigkeit, in der die Reaktanden für die Bildung eines Produktes umgesetzt werden. Vorteilhaft wird durch den Einsatz eines Platin-Übergangsmetalls in Kombination mit einem Polymerbinder, der auf Kohlenwasserstoff-Ionomeren basiert, eine höhere Ausbeute und/oder eine höhere Reaktionsgeschwindigkeit erreicht. Die verbesserte Kinetik trägt vorteilhaft dazu bei, dass die Brennstoffzelle auch bei trockner Bedingung hohe Leistungen erzielt.

Mit der Leistung ist insbesondere die elektrische Leistung gemeint, die von der Brennstoffzelle für den Betrieb eines elektrischen Verbrauchers bereitgestellt wird. Der durchschnittliche Fachmann weiß, dass im Kontext von Brennstoffzellen für die Leistung die Stromdichte (Stromstärke pro Fläche, SI-Einheit [j] = A/m² (Ampère pro Quadratmeter)) ein charakteristischer Parameter ist, der die Leistung der Brennstoffzelle charakterisiert. Die Stromdichte einer Brennstoffzelle berücksichtigt insbesondere Teilstromdichten, d. h. Stromdichten über der Anode und der Kathode. Die Stromdichte einer Brennstoffzelle kann bevorzugt auch eine Ionenleitfähigkeit berücksichtigen, insbesondere im Hinblick auf die Ausgestaltung des Elektrolyten.

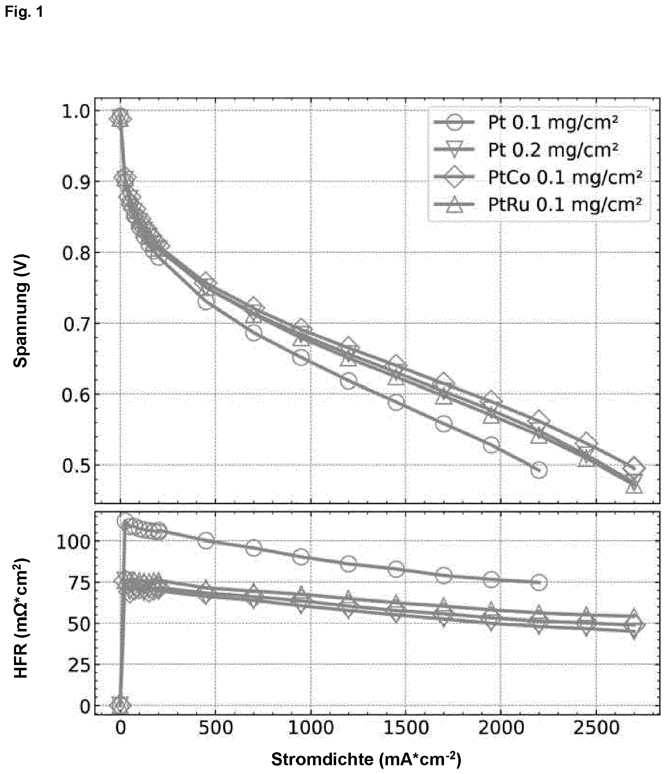

Die untenstehenden Beispiele zeigen insbesondere, dass bei einer kohlenwasserstoffbasierten Brennstoffzelle durch die Verwendung von Pt-Übergangsmetall-Legierungen (z. B. PtCo oder PtRu) in der Anode im Vergleich zur Verwendung von reinem Platin bei gleicher Beladung mit katalytisch aktivem Material der Hochfrequenzwiderstand (HFR, englisch: *high frequency resistance*) wesentlich abgesenkt und damit eine bessere Zellleistung erreicht werden kann (siehe Fig. 1).

Bei der für die Messungen durchgeführten Impedanzspektroskopie wird ein Wechselstromwiderstand (Impedanz) in Abhängigkeit von der Frequenz gemessen. Die Information, die man aus der Impedanzspektroskopie gewinnen kann, beruht darauf, dass verschiedenen Vorgänge im untersuchten System unterschiedliche Zeitkonstanten besitzen, sodass eine periodische Anregung in verschiedenen Frequenzbereichen unterschiedliche messbare Reaktionen des Systems hervorruft.

Der Hochfrequenzwiderstand umfasst, vorzugsweise als eine Summe, eine lonenleitfähigkeit der Polymermembran und eine Elektronenleitfähigkeit der Brennstoffzelle. Während bevorzugt die Elektronenleitfähigkeit als konstant angesehen werden kann, ist die lonenleitfähigkeit, beispielsweise die Protonenleitfähigkeit, der Polymermembran veränderlich und in erster Linie abhängig vom Wassergehalt bzw. der Feuchtigkeit der Membran-Elektroden-Einheit. Da die elektrischen Widerstände typischerweise klein gegenüber dem Elektrolytwiderstand sind, ist der Hochfrequenzwiderstand im Wesentlichen durch die Polymermembranleitfähigkeit gegeben.

Eine Verringerung des Hochfrequenzwiderstandes ist ein wesentlicher Indikator für eine Leistungsverbesserung einer Brennstoffzelle. Letzteres wird durch die erfindungsgemäße Brennstoffzelle erreicht (siehe Fig. 1).

Darüber hinaus kann vorteilhaft auch der Bereich der elektrischen Spannung erweitert werden, in dem eine Betriebstauglichkeit der Brennstoffzelle ermöglicht wird (Betriebsspannung) (siehe Fig. 1). Der Ausgangspunkt einer Kennlinie (elektrische Spannung bzw. Voltage in Fig. 1 gegen Stromstärke bzw. Stromdichte, siehe Fig. 1) gibt die sogenannte Klemmenspannung der Brennstoffzelle im Ruhezustand wieder (Ruhespannung). Nach erfolgter Belastung und damit sinkender Betriebsspannung wird sich die Brennstoffzelle im Ruhezustand bis zu diesem Spannungswert regenerieren. Im Bereich der niedrigen Stromstärken nimmt die Klemmenspannung zunächst mit steigender Stromstärke stark ab. Bei weiterer Belastung nimmt die Kurve einen flacheren Verlauf. In diesem Bereich nimmt die Zellspannung bei weiterer Belastung nur wenig ab. Dieser Bereich kann für den Betrieb der Brennstoffzelle genutzt werden (Betriebsspannung). Die Brennstoffzelle sollte bei unterschiedlicher Belastung eine möglichst konstante Spannung liefern, um eventuelle Verbraucher zu versorgen. Wie in der Fig. 1 deutlich wird, ist der letzte Bereich bei z. B. bei einer Platin-Cobalt-Legierung und einer Platin-Ruthenium Legierung aufgeweiteter im Vergleich zu Brennstoffzellen, bei denen nur Platin als katalytisch aktives Material eingesetzt wird.

Die Verwendung einer Platin-Übergangsmetall-Legierung anstelle von Platin in einer Anode mit einem Polymerbinder, welcher auf Kohlenwasserstoff-Ionomeren basiert, führt somit vorteilhaft zu einer deutlich verbesserten Leistung (bei vergleichbarer Beladung mit katalytisch aktivem Material).

Alternativ kann vorteilhaft ebenso mittels der erfindungsgemäßen Brennstoffzelle der Bedarf an katalytisch aktivem Material eingespart werden. So kann, wie die Beispiele ferner zeigen, durch die Verwendung von Pt-Übergangsmetall-Legierungen (z.B. PtCo oder PtRu) in der Anode das katalytisch aktive Material (im Vergleich zur Verwendung von Platin) um die Hälfte reduziert werden, um vergleichbare Leistungen zu erreichen (vgl. ebenfalls Fig. 1). Durch die Möglichkeit, vergleichbare Leistungen bei einem verringerten Anteil an katalytisch aktivem Material zu generieren, kann vorteilhaft eine erhebliche Ressourcenschonung sowie Kosteneinsparung erreicht werden.

Von besonderem Vorteil ist ferner, dass die die Leistungsverbesserung der erfindungsgemäßen Brennstoffzelle auch bei trockenen Bedingungen erreicht werden kann, d. h. bei Bedingungen, in denen ein verringerter Anteil von Wasser bzw. Feuchtigkeit vorliegt. So hatten die Anoden in den untenstehenden Beispielen lediglich eine Feuchtigkeit von 35 %, was insbesondere bei kohlenwasserstoffbasierten Brennstoffzellen zu starken Leistungseinbußen führen könnte. Das hängt damit zusammen, dass eine hinreichende Feuchtigkeit gegeben sein muss, damit Strom von der Brennstoffzelle genutzt werden kann. Vorteilhaft kann der notwendige Anteil an Feuchtigkeit verringert werden, um eine zuverlässige Stromerzeugung gewährleisten zu können.

Der vorteilhafte Effekt der Leistungsverbesserung der Brennstoffzelle war unerwartet und daher völlig überraschend. Ohne auf die Theorie beschränkt zu sein, kann die verbesserte Leistung damit begründet werden, dass eine Platin-Übergangsmetall-Legierung als katalytisch aktives Material in der Anode in Kombination mit einem auf Polymerbinder auf Basis von Kohlenwasserstoff-Ionomeren vorliegt.

So besteht eine mögliche Erklärung für die überraschende Leistungssteigerung darin, dass die katalytische Aktivität des Platins (einer Platin-Übergangsmetall-Legierung) sich stärker in Präsenz eines auf Kohlenwasserstoff-Ionomeren basierenden Polymerbinders entfaltet als bei einer Verwendung von reinem Platin als katalytisch aktivem Material. Die Erfinder gehen davon aus, dass im letzteren Fall die katalytische Aktivität des Platins (eines reinen Platins als katalytisches Material) teilweise durch die Bereitstellung eines auf Kohlenwasserstoff-Ionomeren basierenden Polymerbinders gehemmt wird. Die Hemmung wird auf einfache und effektive Weise mittels der Substitution reinen Platins durch eine Platin-Übergangsmetall-Legierung verhindert.

Ein weiterer Vorteil ist es, dass die erfindungsgemäße Ausgestaltung der Anode mit einem katalytisch aktiven Material umfassend eine Platin-Übergangsmetall-Legierung und einem Polymerbinder umfassend kohlenwasserstoffbasierte lonomere ein verbessertes Wassermanagement erzielt wird.

Das Wassermanagement der Brennstoffzelle meint bevorzugt die Beibehaltung eines Feuchtigkeitsanteils bzw. Wasseranteils, durch den ein optimaler Betrieb der Brennstoffzelle gewährleistet werden kann. Die Polymermembran, welche zwischen der Anode und Kathode positioniert wird, ist für Ionen leitfähig, wenn sie eine hinreichende Feuchtigkeit aufweist. Eine Polymermembran, welche eine geringe Feuchtigkeit aufweist, zeigt einen höheren Widerstand als eine ausreichend befeuchtete Membran. Andererseits darf die Feuchtigkeit innerhalb der Brennstoffzelle nicht zu hoch sein. Eine zu hohe Feuchtigkeit kann dazu führen, dass die Anode und/oder die Kathode geflutet wird. Dies kann beispielsweise zu einer Ausspülung des katalytisch aktiven Materials führen. Der Betrieb der Brennstoffzelle kann in beiden Extremfällen, d. h. beim Austrocknen der Polymermembran oder beim Überfluten der Anode und/oder Kathode, stark beeinträchtigt oder gar zum Erliegen kommen. Die Beibehaltung eines optimalen Feuchtigkeitsanteils in der Brennstoffzelle für eine Vermeidung von einem oder beiden der genannten Extremfälle wird unter dem Wassermanagement der Brennstoffzelle zusammengefasst.

Die im Sinne der Erfindung vorgenommene Ausgestaltung der Anode umfassend ein katalytisch aktives Material, das eine Platin-M-Legierung umfasst, und einen Polymerbinder, der auf Kohlenwasserstoff-Ionomeren basiert, hat sich als vorteilhaft erwiesen, um ein optimales Wassermanagement für die Brennstoffzelle gewährleisten zu können. Dies kann unter anderem darauf zurückgeführt, dass durch die Anode vorteilhaft durch eine verbesserte Kinetik und eine damit verbundene effiziente Reaktion dauerhaft Elektronen abgegeben werden, um eine Oxidation herbeizuführen. Die Elektronen gelangen durch die Polymermembran in dem Abschnitt der Brennstoffzelle, in dem sich die Kathode und ein Oxidationsmittel befinden. Das Oxidationsmittel kann beispielsweise bei einer Wasserstoff-Brennstoffzelle durch Sauerstoff gebildet werden. Daraufhin erfolgt eine Aufnahme der Elektronen, die durch die Anode abgegeben wurden, sodass eine Reduktion stattfinden kann. Bei einer Wasserstoff-Brennstoffzelle reagieren die Protonen bzw. Wasserstoffionen mit dem Sauerstoff zu Wasser. Hierbei wird eine dauerhafte Bildung von Wasser ermöglicht, um einen optimalen Wasser- bzw. Feuchtigkeitsanteil beibehalten zu können, um einerseits eine Trocknung der Polymermembran und andererseits eine Flutung der Anode und/oder Elektrode zu vermeiden. Demzufolge weist die Brennstoffzelle vorteilhaft eine hohe Lebensdauer auf, sodass ein langanhaltender Betrieb für die Bereitstellung eines elektrischen Stroms ermöglicht wird.

Ein auf Kohlenwasserstoff-Ionomeren basierter Polymerbinder und eine Platin-Übergangsmetall-Legierung wird in der Offenbarung von Nguyen et al. (2021) lediglich für die Kathode gelehrt, jedoch nicht für die Anode. Ausgehend vom Stand der Technik, insbesondere vor dem Hintergrund der Offenbarung von Nguyen et al. (2021), war es keineswegs naheliegend, zur Erfindung zu gelangen. Letzteres hat mehrere Gründe, welche im Folgenden näher ausgeführt werden. Die Kathode und Anode erfüllen innerhalb der Brennstoffzelle unterschiedliche Funktionen. So findet an der Kathode eine Reduktion von Sauerstoff statt, während an der Anode die Oxidation von Wasserstoff (im Beispiel der Wasserstoff-Brennstoffzelle) ausgeführt wird. Demzufolge ist die strukturelle Zusammensetzung der Kathode keineswegs unmittelbar übertragbar auf die strukturelle Zusammensetzung der Anode.

Darüber hinaus wird im Stand der Technik die Kathode als technisch relevantere Komponente (im Vergleich zur Anode) der Brennstoffzelle betrachtet. Mithin war es keineswegs erwartbar, dass eine erhebliche Leistungsverbesserung des Wassermanagements der Brennstoffzelle durch eine Optimierung der Anode erzielt werden kann. Die gängige Meinung in der Fachwelt war es hingegen, Optimierungen an der Kathode vorzunehmen. Zwar ist es im Stand der Technik auch teilweise bekannt, an der Anode eine Platin-Übergangsmetall-Legierung als katalytisch aktives Material in Kombination mit einem PFSA-basierten Polymerbinder zu verwenden. Besondere Vorteile hinsichtlich der Leistungsfähigkeiten wurden für diese Kombination jedoch nicht beschrieben. Ohnehin würde durch Vorteile einer Kombination eines PFSA-basierten Polymerbinders mit einem katalytisch aktiven Material umfassend eine Platin-Übergangsmetall-Legierung keinesfalls nahegelegt, dass eine Platin-Übergangsmetall-Legierung in einer Anode auch Vorteile in Kombination eines Polymerbinders, der auf Kohlenwasserstoff-Ionomeren basiert, bereitstellen könnte.

Darüber hinaus ist es bekannt, dass die Konditionierung von Brennstoffzellen, bevor diese ausgeliefert und/oder verwendet werden, ein sehr kritischer Prozess ist. Man spricht hierbei vom sogenannten Break-in der Brennstoffzelle. Anders ausgedrückt, bezeichnet der Break-in einen initialen Einsatz der Brennstoffzelle, bei der die Brennstoffzelle eine maximale Leistung erreichen kann. Im Stand der Technik wird der Break-in häufig unter anodenseitig trockenen Bedingungen durchgeführt. Dies ist unter anderem dem Umstand geschuldet, dass Brennstoffzellen eine andere Dimensionierung für technisch relevante Anwendungen aufweisen gegenüber den Brennstoffzellen, welche im Labor untersucht werden.

Die erfindungsgemäße Brennstoffzelle, insbesondere im Hinblick auf die Ausgestaltung seiner Anode, erzielt erhebliche Verbesserungen bei technisch relevanten Anwendungen, d. h. unter "realen" Bedingungen, die sich von den Bedingungen im Labormaßstab unterscheiden. Vor diesem Hintergrund ist es nicht naheliegend, eine Zusammensetzung gemäß Nguyen et al. (2021) der Kathode auf die Anode zu übertragen, da diese speziell für eine kathodenseitige Spaltung von Sauerstoff im Kontext von Wasserstoff-Brennstoffzellen optimiert wurde. Eine Wasserstoffspaltung auf der Anodenseite läuft praktisch so schnell bzw. spontan auf Platinoberflächen ab, dass diese (bisher) nicht als limitierend angesehen wurde. Letzteres stimmt auch mit dem überein, was in Brennstoffzellen festzustellen ist, die auf PFSA basieren. Kohlenwasserstoffbasierte lonomere verhalten sich jedoch signifikant anders als PFSA-basierte Materialien, was von den Erfindern in diesem Kontext der Anode erstmals erkannt und gezielt genutzt wurde, um den Betrieb der Brennstoffzelle zu optimieren.

Eine Brennstoffzelle bezeichnet im Sinne der Erfindung vorzugsweise eine Vorrichtung, die der elektrochemischen Energieerzeugung dient. Eine Brennstoffzelle ist vorzugsweise dazu ausgelegt, die Entstehung von Wasser, elektrischem Strom und/oder Wärme zu bewirken, in dem ein zugeführter Brennstoff mit einem Oxidationsmittel reagiert. Strukturell umfasst die Brennstoffzelle insbesondere Elektroden, d. h. mindestens eine Anode und mindestens eine Kathode, sowie einen Elektrolyt.

Insbesondere kann die Brennstoffzelle bevorzugt eine MEA, d. h. eine Membran-Elektroden-Einheit (englisch: *membrane electrode assembly*) umfassen oder im Wesentlichen aus dieser bestehen. Eine MEA bezeichnet bevorzugt einen stackartigen Aufbau umfassend eine Polymermembran, Anode und Kathode. Dabei liegen bevorzugt die Anode und die Kathode auf entgegengesetzten Flächen der Polymermembran vor. Die MEA kann beispielsweise derart bereitgestellt werden, dass auf zwei Seiten einer Polymermembran ein elektrisch leitfähiges Material umfassend ein katalytisch aktives Material beschichtet wird. Zusätzlich kann bevorzugterweise die Brennstoffzelle weitere Komponenten umfassen, wie beispielsweise anodennahe oder kathodennahe Transportschichten, eine oder mehrere Mono- und/oder Bipolarplatten, welche vorzugsweise mit der MEA zur Bildung der Brennstoffzelle verbunden werden können.

Der Elektrolyt bezeichnet ein festes oder flüssiges Substrat, mit dem Ionen geleitet werden können. Im Kontext der Erfindung dient vorzugsweise die Polymermembran als ein fester Elektrolyt, um eine lonenleitung ermöglichen zu können, beispielsweise eine Leitung von Protonen bzw. Wasserstoffionen. Die Polymermembran ermöglicht vorzugsweise auch eine elektrische Separierung der Anode und Kathode voneinander. Ferner weist bevorzugt die Polymermembran eine spezifische Permeabilität gegenüber einer Ionenart, beispielsweise gegenüber Protonen auf. Im Falle einer bevorzugten Protonenleitfähigkeit der Polymermembran können somit Protonen, welche auf der Anodenseite entstehen, gezielt durch die Polymermembran diffundieren und auf die Kathodenseite gelangen.

Der Fachmann erkennt, dass neben den genannten strukturellen Komponenten der Brennstoffzelle auch weitere Komponenten implementiert werden können, um einen Aufbau für die Brennstoffzelle vorzugeben. So kann es bevorzugt sein, dass zusätzlich zu den genannten bevorzugten Komponenten Transportschichten, eine oder mehrere Monopolarplatten und/oder Bipolarplatten an der Anode und/oder Kathode angebracht sind, sodass eine verbesserte Funktionalität und/oder mechanische Stabilisierung der Komponenten erreicht wird.

Die Anode und die Kathode bilden die Elektroden der Brennstoffzelle. An der Anode oder anodenseitig findet bevorzugt eine Oxidation statt, d. h. eine chemische Reaktion, bei der eine oder mehrere Elektronen abgegeben werden. Dies wird beispielsweise im Fall von Wasserstoff (H₂) als Brennstoff durch eine Spaltung ermöglicht, sodass Wasserstoffionen und Elektronen entstehen. An der Kathode oder kathodenseitig findet wiederrum die Reduktion statt, d. h. eine chemische Reaktion, bei der eine oder mehrere Elektronen aufgenommen werden. Durch Sauerstoff als beispielhaftes Oxidationsmittel werden hierdurch die Elektronen aufgenommen, welche durch die Spaltung des Wasserstoffs auf der Seite der Anode resultierten. Durch eine elektrische Verbindung zwischen der Anode und der Kathode gelangen die eine oder mehreren Elektronen auf die Seite der Kathode, während eine Überführung von beispielsweise Protonen auf der Seite der Anode zur Seite der Kathode durch die Polymermembran ermöglicht wird. Hierdurch kann Wasserstoff als Brennstoff und Sauerstoff als Oxidationsmittel auf der Seite der Kathode Wasser entstehen.

Im Kontext der Erfindung umfasst die Anode vorzugsweise ein katalytisch aktives Material, ein Trägermaterial und einen Polymerbinder. Es kann ebenfalls bevorzugt sein, dass auch die Kathode ein katalytisch aktives Material, ein Trägermaterial und einen Polymerbinder umfasst.

Ein katalytisch aktives Material bezeichnet bevorzugt ein Material, mit dem eine chemische Reaktion katalysiert werden kann. Unter einer Katalyse einer chemischen Reaktion ist bevorzugt gemeint, dass diese schneller oder beschleunigt stattfinden kann. Es kann ebenfalls bevorzugt sein, dass es durch das Vorhandensein des katalytisch aktiven Materials erst ermöglicht wird. Ferner kann bevorzugt durch die Katalysatorschicht eine Aktivierungsenergie zur Herbeiführung der chemischen Reaktion reduziert werden. Das katalytisch aktive Material umfasst bevorzugt einen oder mehrere Metall, beispielsweise in Form von Metallpartikeln. Das katalytisch aktive Material kann insbesondere ein Edelmetall umfassen.

Im Kontext der Erfindung ist vorgesehen, dass die Anode ein katalytisch aktives Material umfasst, das eine Platin-M-Legierung umfasst, wobei M ein oder mehrere Übergangsmetalle bezeichnet. Ein Übergangsmetall bezeichnet ein Element, das eine Ordnungszahl von 21 bis 30, 39 bis 48, 57 bis 80 und 89 bis 112 aufweist. Die Ausdrücke Übergangsmetall und Übergangselement können synonym verwandt werden, da es sich bei den genannten Elementen mit den genannten Ordnungszahlen um Metalle handelt. Die Ordnungszahl gibt die Stellung des chemischen Elementes im Periodensystem der Elemente und die Anzahl der Protonen im Atomkern an. Eine Platin-M-Legierung meint damit bevorzugt eine Legierung, die Platin und ein oder mehrere Übergangsmetalle umfasst.

Das katalytisch aktive Material liegt bevorzugt auf einem Trägermaterial vor. Das Trägermaterial kann bevorzugt als Träger für das katalytisch aktive Material aufgefasst werden. Das Trägermaterial kann bevorzugt auch der Verteilung des katalytisch aktiven Materials dienen. Der durchschnittliche Fachmann erkennt, dass mit der Formulierung "auf einem Trägermaterial" bevorzugt gemeint ist, dass das katalytisch aktive Material mit dem Trägermaterial vermengt ist. Insofern kann eine Anbringung des katalytisch aktiven Materials auf dem Trägermaterial bedeuten, dass das katalytisch aktive Material innerhalb einer Schicht umfassend das Trägermaterial eingebracht ist und/oder sich auf einer Oberfläche des Trägermaterials befindet. Vorzugsweise meint das Vorliegen des katalytisch aktiven Materials auf dem Trägermaterial eine Verbindung des katalytisch aktiven Materials zum Trägermaterial. Der Polymerbinder wirkt bevorzugt unterstützend zur Verbindung bzw. Anbindung des katalytisch aktiven Materials an das Trägermaterial. Vorzugsweise kann für das Trägermaterial Kohlenstoff verwandt werden, wobei bevorzugt verschiedene Ausgestaltungen von Kohlenstoff eingesetzt werden können, beispielsweise Graphit.

Das Trägermaterial dient vorzugsweise der Verteilung des katalytisch aktiven Materials. Insbesondere kann durch das Trägermaterial die aktive Oberfläche des katalytisch aktiven Materials erhöht werden. Ferner kann durch das Trägermaterial die Stabilität und der Ladungstransport begünstigt werden. Das Trägermaterial kann bevorzugt in Form eines (vorzugsweise planaren) Films oder auch in Form von Partikeln, beispielsweise mit sphärische Ausgestaltung, vorliegen. Im Falle des bevorzugten Films zur Bereitstellung des Trägermaterials ist das katalytisch aktive Material vorzugsweise innerhalb des Films verteilt. Ferner kann es bevorzugt sein, dass das Trägermaterial porös ist, insbesondere auch bei der Bildung des Trägermaterials als Film oder durch Partikel.

Der Polymerbinder bezeichnet bevorzugt eine Substanz, mit der eine langanhaltende und stabile Verbindung zwischen dem katalytisch aktiven Material und dem Trägermaterial ermöglicht wird.

Durch die feste Verbindung des katalytisch aktiven Materials an das Trägermaterial, die durch den Polymerbinder vermittelt wird, kann ferner vorteilhaft ein Stromtransport sichergestellt werden. Mithin trägt der Polymerbinder sowohl zur mechanischen Integrität der Anode (oder generell an den Elektroden, wenn bevorzugt ein Polymerbinder in der Kathode zum Einsatz kommt) und der elektrischen Funktionalität durch eine Gewährleistung einem Elektronen- und/oder Ionentransport. Insbesondere ist eine hinreichende Stabilität des Polymerbinders beim elektrischen Potential zwischen der Anode und Kathode gegeben, um einerseits einen Stromtransport bzw. Elektronentransport zu ermöglichen und andererseits die Katalyse im Hinblick auf die Umsetzung der Reaktanden fortschreiten lassen zu können. Die Bindung durch den Polymerbinder zwischen katalytisch aktivem Material und Trägermaterial wird bevorzugt über eine Adhäsion übermittelt. Vorzugsweise ist bereits eine Stabilität des katalytisch aktiven Materials auf das Trägermaterial gegeben. Der Polymerbinder wirkt vorzugsweise unterstützend für die Bindung, um eine langanhaltende, stabile und zuverlässige Bindung zu ermöglichen.

Ferner ist es im Kontext der Erfindung vorgesehen, dass der Polymerbinder der Anode auf Kohlenwasserstoff-Ionomeren basiert. Ein lonomer ist im Stand der Technik als Polymer bekannt, welches wiederkehrende Seitenketten aufweist, welche an das Polymergerüst, auch Polymerrückrat genannt, gebunden sind und elektrisch geladene bzw. ionische und elektrisch neutrale funktionelle Gruppen umfassen. Seitenketten, welche ionische funktionelle Gruppen umfassen, werden als ionische Seitenketten bezeichnet. Die funktionellen Gruppen des kohlenwasserstoffbasierten lonomers für den Polymerbinder sind maßgeblich für die Übermittelung der chemischen Verbindung zwischen Trägermaterial und katalytisch aktivem Material verantwortlich und gewährleisten gleichzeitig eine gute Leitfähigkeit der Anode. Bevorzugte funktionelle Gruppen des lonomers werden im Folgenden noch näher diskutiert.

In einer weiteren bevorzugten Ausführungsform ist die Brennstoffzelle dadurch gekennzeichnet, dass die kohlenwasserstoffbasierten lonomere frei von perfluorierten Sulfonsäuren sind, vorzugsweise frei von Fluor.

Die Formulierung, dass der Polymerbinder auf Kohlenwasserstoff-Ionomeren basiert, meint mithin bevorzugt, dass auch der Polymerbinder frei von perfluorierten Sulfonsäuren sind, vorzugsweise frei von Fluor.

In bevorzugten Ausführungsformen basiert auch die Polymermembran auf Kohlenwasserstofflonomeren, welche bevorzugt frei von perfluorierten Sulfonsäuren sind, besonders bevorzugt frei von Fluor. Dies meint vorzugsweise, dass ebenfalls die Polymermembran frei von perfluorierten Sulfonsäuren ist, besonders bevorzugt frei von Fluor.

In weiteren bevorzugten Ausführungsformen ist die gesamte erfindungsgemäße Brennstoffzelle umfassend eine Anode, eine Kathode und eine Polymermembran frei von perfluorierten Sulfonsäuren, vorzugsweise frei von Fluor.

Sulfonsäuren sind bekannt als organische Schwefelverbindungen mit der allgemeinen Struktur R-SO₂-OH, wobei R einen organischen Rest, SO₂ Schwefeldioxid und OH die Hydroxygruppe bezeichnet.

Perfluoriert bedeutet, dass an mindestens einem Kohlenstoffatom des Kohlenstoffgerüstes der Sulfonsäure, an dem Wasserstoffatome gebunden sind, diese Wasserstoffatome vollständig durch Fluoratome ersetzt sind. Es können vorzugsweise auch die Wasserstoffatome von mehreren Kohlenstoffatomen oder von allen Kohlenstoffatomen des Kohlenstoffgerüstes durch Fluoratome ersetzt sein.

Frei von perfluorierten Sulfonsäuren meint bevorzugt, dass die kohlenwasserstoffbasierten lonomere bzw. der Polymerbinder einen Anteil von höchstens bis zu 5 Molprozent, besonders bevorzugt von höchstens bis zu 2,5 Molprozent, ganz besonders bevorzugt von höchstens bis zu 1 Molprozent der perfluorierten Sulfonsäuren aufweist.

Im Wesentlichen fluorfrei meint vorzugsweise, dass Fluoranteile vorliegen von höchstens bis zu 5 Molprozent, höchstens bis zu 2,5 Molprozent oder höchstens bis zu 1 Molprozent. Dass die Polymermembran oder der Polymerbinder im Wesentlichen fluorfrei ist, kann besonders bevorzugt bedeuten, dass die Polymermembran oder der Polymerbinder vollständig frei von Fluor ist.

In einer möglichen Ausführungsform umfasst der Polymerbinder sulfo-phenlyiertes Polyarylen (sPPX), insbesondere sulfo-phenlyiertes Polyphenylen (sPPP), d. h. sulfo-phenyliertes Polyarylen, welches einem phenylen-Linker in der Hauptkette des lonomers aufweist. Sulfo-phenyliertes Polyphenylen ermöglicht für den Polymerbinder eine hohe mechanische Robustheit sowie eine hohe ionische (protonische) Leitfähigkeit, was für den Betrieb in einer Brennstoffzelle besonders vorteilhaft ist. Das sulfo-phenylierte Polyphenylen kann bevorzugt die Struktur aufweisen, wie sie in der Fig. 1 des Papers Nguyen et al. (2021) oder in der Fig. 1 der Patentanmeldung WO 2018/187864 A1 offenbart wird. In einer weiteren Ausführungsform umfasst der Polymerbinder Pemion, vorzugsweise Pemion HNN9 und/oder Pemion HNN8, besonders vorzugsweise Pemion HNN8.

In einer weiteren bevorzugten Ausführungsform ist die Brennstoffzelle dadurch gekennzeichnet, dass die kohlenwasserstoffbasierten lonomere eine aromatische Hauptkette und/oder eine aromatische Seitengruppe umfassen.

Bei kohlenwasserstoff-basierten lonomeren, welche üblicherweise eine aromatische Hauptkette und/oder aromatische Seitenketten aufweisen, wird eine hohe Sensitivität gegenüber Feuchtigkeitsschwankungen und einem schlechten Wassermanagement in der Brennstoffzelle beobachtet, wodurch die Leistung der Brennstoffzelle limitiert bzw. verschlechtert ist.

Ohne an diese Theorie gebunden sein zu wollen, gehen die Erfinder davon aus, dass diese Sensitivität gegenüber Feuchtigkeitsschwankungen und einem damit verbundenen schlechten Wassermanagement zumindest teilweise auf eine erhöhte Interaktion der aromatischen Gruppen der Haupt- und Seitenketten der lonomere mit dem katalytisch aktiven Material zurückzuführen ist, welches üblicherweise Platin umfasst. Demnach scheint es plausibel, dass in den Anoden des Standes der Technik aromatische Gruppen der lonomere an das Platin absorbieren und dabei das Platin "deckeln", sodass es nicht mehr für die Katalyse zur Verfügung steht und die Reaktion an der Anode kinetisch limitiert ist. Diese Deckelung des Platins durch aromatische Gruppen erweist sich insbesondere in Bezug auf den Polymerbinder als relevant, da dieser im direkten Kontakt mit dem katalytisch aktiven Material steht.

Vorteilhafterweise wird eine solche kinetische Limitierung der Reaktion an der Anode und somit der Leistung der Brennstoffzelle bei der Verwendung kohlenwasserstoff-basierter lonomere als Polymerbinder in der erfindungsgemäßen Anode nicht beobachtet. Vielmehr weist die erfindungsgemäße Brennstoffzelle ein verbessertes Wassermanagement und eine verbesserte Katalyse auf. Diese überraschende Verbesserung des Wassermanagements und der Katalyse gegenüber vergleichbaren Brennstoffzellen des Standes der Technik ist dabei zumindest teilweise auf eine verringerte Interaktion des auf einem Kohlenwasserstoff-basierten lonomers mit dem katalytisch aktiven Material, welches eine Platin-Übergangsmetall-Legierung umfasst, zurückzuführen. Durch die verringerte Interaktion wird eine Katalyse durch Platin weniger gehemmt und die Reaktion an der Anode läuft somit kinetisch effizienter ab. Der erfindungsgemäße Aufbau der Anode ermöglicht somit eine Verwendung kohlenwasserstoff-basierter lonomere, welche aromatische Gruppen enthalten, in einer Patin-basierten Anode mit überraschend guter Performance. Dies führt dabei zu einer verbesserten Katalyse an der Anode und einer verbesserten Gesamtleistung einer Brennstoffzelle, welche die Verwendung fluorbasierter Materialien wie PFSA vermeidet.

In einer weiteren Ausführungsform ist die Brennstoffzelle dadurch gekennzeichnet, dass die aromatische Hauptkette ausgewählt ist aus einer Gruppe bestehend aus Polyphenylen, Polyetherketon, Polyethersulfon, Polyphenylenether, Poly(o-Terphenylen), Poly(m-Terphenylen), Poly(p-Terphenylen), Poly(9,9-Dimethylfluoren) und Kombinationen davon. In einer bevorzugten Ausführungsform umfasst die aromatische Hauptkette Polyphenylen.

In einer weiteren Ausführungsform ist die Brennstoffzelle dadurch gekennzeichnet, dass die aromatische Seitengruppe subsituiert ist, vorzugsweise durch Sulfonsäure (H₂SO₃⁻) und/oder Phosphorsäure (H₂PO₄⁻). In einer weiteren Ausführungsform ist die Brennstoffzelle dadurch gekennzeichnet, dass die aromatische Seitengruppe durch Sulfonsäure (H₂SO₃⁻) subsituiert ist.

In einer weiteren bevorzugten Ausführungsform ist die Brennstoffzelle dadurch gekennzeichnet, dass der Polymerbinder in einem Anteil von 1 - 30 wt. % (des Gesamtgewichts der Anode) vorliegt.

Ein lonomer weist vorzugsweise einen Anteil von mindestens 10 % an ionische Seitenketten (vorzugsweise in Bezug auf die Gesamtzahl von ionischen und nicht-ionischen Seitenketten) auf, besonders bevorzugt einen Anteil von mehr als 30 % an ionischen Seitenketten.

In einer bevorzugten Ausführungsform weist das lonomer einen Anteil von mindestens 10 % (der Seitenketten) ionische Seitenketten auf, also beispielsweise mindestens 10 %, 15 %, 20 %, 25 %, 30 %, 35 %, 40 %, 45 %, 50 %, 55 %, 60 %, 65 %, 70 %, 75 %, 80 %, 85 %, 90 %, 95 % oder 100 % an ionische Seitenketten. In einer weiteren Ausführungsform weist das lonomer einen Anteil von 30 % bis 70 % an ionische Seitenketten auf.

Ein lonomer kann weiterhin Seitenketten umfassen, welche nicht-ionische bzw. neutrale funktionelle Gruppen umfassen, wie beispielsweise, ohne auf diese Beispiele beschränkt zu sein, Alkyl, Halogen, Nitro und/oder Cyano.

Ein Kohlenwasserstoff-Ionomer meint bevorzugt ein lonomer, welches ein Polymerrückgrat hat, das im Wesentlichen Kohlenstoff und Wasserstoff umfasst. Das Polymerrückgrat eines Kohlenwasserstoff-Ionomers kann weiterhin Heteroatome, wie beispielsweise Stickstoff, Schwefel, Sauerstoff und/oder Phosphor, umfassen. Ein Kohlenwasserstoff-Ionomer kann weiterhin bevorzugt einen Linker umfassen, welcher zwischen dem Rückgrat des Kohlenwasserstoff-Ionomers und einer Seitenkette und/oder zwischen den einzelnen Einheiten des Polymerrückrats eine kovalente Verbindung bildet, beispielsweise, ohne auf diese Beispiele beschränkt zu sein, Sulfonyl, Ester, Ether, Amide, sekundäre Amine, tertiäre Amine und/oder Amonium.

Beispiele für ein Polymerrückgrat eines Kohlenwasserstoff-Ionomers umfassen, ohne auf diese Beispiele beschränkt zu sein, Polyarylen wie beispielsweise Polyphenylen, Polysulfon, Polyester, Polyether, Polyketon, Polyimid, Polyamid, Polyimidazol, Polyurethan und Polyalkylen und Polyolefin.

In einer bevorzugten Ausführungsform umfasst ein Kohlenwasserstoff-Ionomer ein Polymerrückgrat, welches durch eine Kette umfassend Kohlenstoffatome und Wasserstoffatome gebildet wird. Vorzugsweise umfasst das Polymerrückgrat (auch Hauptkette genannt) Arylgruppen (auch aromatische Gruppen genannt), wie beispielsweise Phenylgruppen. Vorzugsweise umfasst das Polymerrückgrat (auch Hauptkette genannt) Phenylgruppen.

In einer Ausführungsform umfasst das kohlenwasserstoff-lonomer eine aromatische Hauptkette. In einer Ausführungsform umfasst die aromatische Hauptkette eine oder mehrere aromatische Gruppen wie beispielsweise eine oder mehrere Phenylgruppen. In einer weiteren Ausführungsform umfasst das Kohlenwasserstoff-lonomer eine aromatische Seitenkette, wobei die Seitenkette eine oder mehrere aromatische Gruppen umfasst, wie beispielsweise eine oder mehrere Phenylgruppen. Vorzugsweise umfasst ein Kohlenwasserstoff-lonomer eine ionische Seitenkette, welche Sulfonat SO₃-X⁺, Phosphoryl PO₃-X+₂ und/oder Carboxyl COO-X+ umfasst, Borate BO₂-X, Borylverbindungen R-BX₃-H wobei X ein Proton oder ein anderes Kation, wie beispielsweise ein Kalium- oder ein Natrium-Ion ist. In einer weiteren Ausführungsform ist eine oder mehrere der aromatischen Seitengruppen substituiert, vorzugsweise durch Sulfonsäure (H₂SO₃⁻) und/oder Phosphorsäure (H₂PO₄⁻). Bevorzugte Kohlenwasserstoff-Ionomere können der WO 2018/187864 A1 entnommen werden.

Dass ein Polymerbinder und/oder eine Polymermembran auf Kohlenwasserstoff-Ionomeren basiert, meint insbesondere, dass der Polymerbinder und/oder die Polymermembran einen höheren Anteil von Kohlenwasserstoff-Ionomeren aufweist als weitere optionale chemische Verbindungen, die für den Aufbau des Polymerbinders und/oder der Polymermembran eingesetzt werden könnten. Insbesondere kann der Polymerbinder und/oder die Polymermembran im Wesentlichen Kohlenwasserstoff lonomere umfassen, vorzugweise einen Anteil von mehr als 80 Gew.-%, mehr als 90 Gew.-%, mehr als 95 Gew.-%, mehr als 99 Gew.-%.

In einer weiteren bevorzugten Ausführungsform der Erfindung ist das Übergangsmetall M der Platin-M-Legierung ausgewählt aus einer Gruppe umfassend Ruthenium, Kupfer, Scandium, Titan, Rhodium, Silber, Gold, Mangan, Cobalt, Nickel, Eisen und Palladium, bevorzugt Ruthenium, Cobalt, Nickel, besonders bevorzugt Cobalt.

Die Platin-M-Legierung, welche von dem katalytisch aktiven Material umfasst ist, ist bevorzugt für die eigentliche Katalyse beim Betrieb der Brennstoffzelle verantwortlich. Mithin wird hierdurch die Aktivierungsenergie herabgesetzt und damit eine Erhöhung der Reaktionsgeschwindigkeit bewirkt.

Die genannten bevorzugten Übergangsmetalle haben sich als besonders vorteilhaft erwiesen, um in Kombination mit Platin als Legierung eine Leistungsverbesserung der Brennstoffzelle zu erlangen. Insbesondere durch die Anbringung von eine oder mehrere der genannten Übergangsmetalle als Legierungspartner für Platin konnte vorteilhaft erreicht werden, dass eine verringerte Interaktion des kohlenwasserstoffbasierten lonomers mit dem Platin des katalytisch aktiven Materials stattfindet. Hierdurch wird vorteilhaft eine Verringerung einer "Hemmung" für die eigentliche Katalyse und eine verbesserte Kinetik der chemischen Reaktion an der Anode erreicht.

In einer weiteren bevorzugten Ausführungsform ist die Brennstoffzelle dadurch gekennzeichnet, dass die Pt-M-Legierung in einem molaren Verhältnis Pt:M von 30:1 bis 1:1, bevorzugt von 20:1 bis 1:1, besonders bevorzugt von 10:1 bis 1:1 vorliegt.

Vorteilhafterweise kann mit der Pt-M-Legierung in dem genannten bevorzugten Bereich für das molare Verhältnis zwischen dem Platin und dem Übergangsmetall eine hohe Leistung durch die Brennstoffzelle generiert werden, insbesondere im Hinblick auf die Erhöhung von Stromdichten durch die Anode.

Von besonderem Vorteil ist hierbei, dass vergleichbare Stromdichten erzeugt werden können, bei denen die Brennstoffzelle einen geringen Anteil an Platin aufweist. Letzteres verdeutlicht die vorteilhafte Wirkung, insbesondere im Hinblick auf die genannten bevorzugten Bereiche für das molare Verhältnis zwischen Platin und dem Übergangsmetall. So wurde beispielsweise festgestellt, dass im Vergleich zum Einsatz von reinem Platin als katalytisch aktives Material deutliche Leistungsverbesserungen der Brennstoffzelle erreicht werden konnten als bei einer Platin-M-Legierung. Insbesondere kann durch eine Verwendung einer Platin-M in der Anode bei gleicher Beladung an Platin, insbesondere hinsichtlich des Gewichtsprozentes, höhere Stromdichten erzielt werden. Bei einer reduzierten Beladung von Platin bzw. einem reduzierten Gewichtsprozent von Platin kann vorteilhaft die gleiche Leistung bzw. Stromdichte erzielt werden als Zusammensetzungen des katalytisch aktiven Materials des Standes der Technik. So wurde beispielsweise in einer Platin-Cobalt-Legierung auf einem Trägermaterial mit 50 wt% an Platin-Cobalt-Legierung in der Anode und auch bei einer Platin-Ruthenium-Legierung mit 40 wt% Pt und 20 wt% Ru festgellt, welche eine Flächenbeladung von 0,1 mg/cm² aufweisen, höhere Stromdichten erzielt werden kann als katalytisch aktives Material, welches lediglich Platin umfasst mit einer Flächenbeladung von 0,1 mg/cm² oder 0,2 mg/cm² (siehe Fig. 1).

Die vorgenannten molare Anteile von Platin in der Pt-M-Leigierung sind hierbei besonders vorteilhaft. Bereits ab einem molaren Anteil von 10 % der Übergangsmetalle in der Pt-M-Legierung kann die beschriebene vorteilhafte Vermeidung nachteiliger Interaktionen zwischen Platin und den aromatischen Gruppen wirksam vermieden werden. Während auch deutlich höhere Anteile von Übergangsmetallen eingesetzt werden können, ist ab einem molaren Anteil von 50% von M in Pt-M keine starken Leistungssteigerungen zu verzeichnen.

In einer bevorzugten Ausführungsform umfasst die Pt-M-Legierung eine binäre Legierung. Das bedeutet insbesondere, dass die Pt-M-Legierung zwei Legierungspartner umfasst, nämlich Platin und ein Übergangsmetall. Mithin wird die Pt-M-Legierung bei einer binären Legierung durch eine Legierung der Form PtₓM₁₋ₓ gebildet, wobei x eine Zahl umfasst, die von 0 - 1 geht, insbesondere auch deren Zwischenwerte annehmen kann, wie z. B. 0,1, 0,2, 0,3, 0,4, 0,5, 0,6, 0,7, 0,8 oder 0,9 und den relativen Anteil von Platin und dem Übergangsmetall M angibt.

In einer bevorzugten Ausführungsform umfasst die Pt-M-Legierung eine ternäre Legierung. Das bedeutet insbesondere, dass die Pt-M-Legierung drei Legierungspartner umfasst, nämlich Platin und zwei Übergangsmetalle M1 und M1. Mithin wird die Pt-M-Legierung bei einer ternären Legierung durch eine Legierung der Form PtₓM1_{y}M2_{1-x-y} gebildet, wobei x und y eine Zahl umfasst, die von 0 - 1 geht, insbesondere auch deren zwischen Zwischenwerte annehmen kann, wie z. B. 0,1, 0,2, 0,3, 0,4, 0,5, 0,6, 0,7, 0,8 oder 0,9 und den relativen Anteil von Platin und den Übergangsmetallen M1 und M1 angibt. Für x und y gilt ferner die Bedingung x+ y = 1.

In einer weiteren bevorzugten Ausführungsform ist die Brennstoffzelle dadurch gekennzeichnet, dass die Polymermembran ein perfluoriertes Copolymer umfasst. Die Polymermembran kann beispielsweise Nation umfassen. Die vorteilhaften Effekte durch ein perfluoriertes Copolymer, beispielsweise Nation, lassen sich durch deren Bildung für die Polymermembran auf die Brennstoffzelle übertragen. Diese betreffen insbesondere die guten mechanischen Eigenschaften und damit eine hohe mechanische Stabilität, eine hohe lonenleitfähigkeit, eine hohe Selektivität und auch eine hohe chemische Stabilität für die Polymermembran.

Allerdings enthalten perfluorierte Copolymere Anteile an Fluor, Nation beispielsweise Anteile von perfluorierten Sulfonsäuren.

In einer weiteren bevorzugten Ausführungsform ist die Brennstoffzelle dadurch gekennzeichnet, dass die Polymermembran auf Kohlenwasserstoff-Ionomeren basiert, welche bevorzugt frei von perfluorierten Sulfonsäuren sind, besonders bevorzugt frei von Fluor.

Dementsprechend kann es bevorzugt sein, dass die Polymermembran der Brennstoffzelle in Kombination mit der Anode, die bevorzugt einen auf Kohlenwasserstoff-Ionomeren basierenden Polymerbinder umfasst, in der Brennstoffzelle einzugliedern, welche ebenfalls auf Kohlenwasserstoff-Ionomeren basiert. Hierdurch werden im Hinblick auf die Leistungsverbesserung und Umweltverträglichkeit erhebliche Verbesserungen erzielt, als wenn lediglich der Polymerbinder der Anode auf Kohlenwasserstoff-Ionomeren basiert.

Vorteilhafterweise kann durch den Einsatz einer Polymermembran, die auf Kohlenwasserstofflonomeren basiert, dementsprechend weiter auf Substanzen, wie z. B. PFSA, verzichtet werden, welche die Umwelt gefährden. Perfluorierte Säuren sind, wie obig erläutert, giftig für die Leber, können kanzerogen sowie reproduktionstoxisch sein und führen zu Entwicklungsstörungen. Die Gefährdung einer Freisetzung dieser Substanzen wird vorteilhaft weiter minimiert, wenn zusätzlich zum Polymerbinder auch die Polymermembran auf Kohlenwasserstoff-Ionomeren basiert.

Mithin kann es vorteilhaft ermöglicht werden, dass sämtliche Komponenten der Brennstoffzelle auf Kohlenwasserstoff-basierte lonomere basieren und dementsprechend die gesamte Brennstoffzelle keine Anteile von PFSA, insbesondere Fluor, aufweist.

In bevorzugten Ausführungsformen können die Kohlenwasserstoff-basierten lonomere der Polymermembran eine andere chemische Struktur aufweisen als die Kohlenwasserstoff-basierten lonomere des Polymerbinders. Hierdurch kann vorteilhaft eine optimierte Auswahl der Kohlenwasserstoff-basierten lonomere für den jeweiligen Einsatzzweck innerhalb der Polymermembran oder innerhalb des Polymerbinders vorgenommen werden.

In weiteren bevorzugten Ausführungsformen können die Kohlenwasserstoff-basierten lonomere der Polymermembran die gleiche chemische Struktur aufweisen wie die Kohlenwasserstoffbasierten lonomere des Polymerbinders. Letztere bevorzugte Ausführungsform kann insbesondere die Herstellung vereinfachen.

Obige Erläuterungen bzgl. der Kohlenwasserstoff-Ionomere des Polymerbinders sind analog auch übertragbar für die bevorzugten Kohlenwasserstoff-Ionomere der Polymermembran. Die Formulierungen "Kohlenwasserstoff-Ionomere" und "Kohlenwasserstoff basierten Ionomere" können im erfindungsgemäßen Kontext synonym verwandt werden.

In einer weiteren bevorzugten Ausführungsform ist die Brennstoffzelle dadurch gekennzeichnet, dass die Polymermembran eine Protonenaustauschmembran ist.

Eine Protonenaustauschmembran bezeichnet bevorzugt eine Membran, die für Protonen durchlässig ist, während der Transport von Gasen, wie beispielsweise Sauerstoff oder Wasserstoff, verhindert wird. Zu diesem Zweck eignen sich diese bei einer Wasserstoff-Brennstoffzelle.

Vorzugsweise wird die bevorzugte Polymermembran als ein saurer Elektrolyt eingesetzt. Der durchschnittliche Fachmann erkennt, dass auch die Polymermembran als eine feste Komponente sauer sein kann.

Die bevorzugte Protonenaustauschmembran, welche vorzugsweise auf Kohlenwasserstofflonomeren basiert, kann bevorzugt eine Dicke aufweisen von 1 - 100 µm, bevorzugt von 2 - 60 µm, besonders bevorzugt von 5 - 50 µm, ganz besonders bevorzugt von 5 - 20 µm.

Die bevorzugte Protonenaustauschmembran kann die generierte Stromdichte weiter erhöhen, was wiederrum vorteilhaft zu Kosteneinsparungen führt, insbesondere bei Systemen, die mit sehr dynamischen Energiequellen (z. B. Wind und Sonne) gekoppelt sind, bei denen plötzliche Spitzen des Energieeinsatzes ansonsten zu ungenutzter Energie führen würden. Ferner kann auch bei hohen Drücken, welche während des Betriebes der Brennstoffzelle auftreten können, eine langanhaltende Funktionalität gewährleistet werden, auch wenn die Polymermembran als Protonenaustauschmembran eher dünn ausgestaltet ist, d. h. eine geringe Dicke aufweist. Weiterhin wird vorteilhaft eine höhere Energieeffizienz erzielt, da sie geringe ohmsche Verluste aufweist. Zudem kann vorteilhaft eine geringe Gasübertragungsrate der Protonenaustauschmembran erzielt werden. Dies führt wiederrum vorteilhaft dazu, dass eine sehr hohe Reinheit des Produkts erreicht wird, das während des Betriebes der Brennstoffzelle entsteht, beispielsweise Wasser. Dadurch ergibt sich eine hohe Lagersicherheit und langanhaltende Betriebstauglichkeit der Brennstoffzelle, die für den direkten Einsatz vorteilhaft ist.

In einer weiteren bevorzugten Ausführungsform ist die Brennstoffzelle dadurch gekennzeichnet, dass die Anode eine Flächenbeladung von Platin von bis zu 0,2 mg/cm², bevorzugt von bis zu 0,1 mg/cm², bis zu 0,08 mg/cm², bis zu 0,05 mg/cm², bis zu 0,02 mg/cm² oder weniger aufweist.

In einer besonders bevorzugten Ausführungsform ist die Brennstoffzelle dadurch gekennzeichnet, dass die Anode eine Flächenbeladung von Platin von 0.025 mg/cm² - 0.1 mg/cm² aufweist.

Die Flächenbeladung gibt im Sinne der Erfindung bevorzugt das Verhältnis aus einer Masse, vorzugsweise eines Katalysatormaterials, und einer Fläche an. Synonyme Begriffe für die Flächenbeladung sind Massenbelegung, Masse(n)belag, flächenbezogene Masse, Flächenmasse oder Flächengewicht. Im Kontext der Erfindung gibt die Flächenbeladung von Platin eine Teilmasse an, um den Anteil von Platin in der Anode entlang einer Flächeneinheit anzugeben. Die Fläche bezieht sich bevorzugt auf die Fläche der Anode. Die Masse bezieht sich bevorzugt auf die Masse von Platin. Die Angabe einer bevorzugten Flächenbeladung ist unabhängig davon, in welcher bevorzugten Ausgestaltung das Trägermaterial vorliegt, d. h. es ist für die Angabe der Flächenbeladung unerheblich, ob die Platin-Übergangsmetall-Legierung auf einem Film oder auf Partikel, welche das Trägermaterial bereitstellen, angebracht ist.

Eine bevorzugte Angabe für die Flächenbeladung von Platin in einer Platin-Übergangsmetall-Legierung, beispielsweise 0,1 mg/cm² von PtCo (Platin-Cobalt-Legierung), meint bevorzugt, dass 0,1 mg Platin auf einem Quadratzentimeter der Fläche der Anode vorliegen. Das kann insbesondere unabhängig davon sein, ob die PtCo-Legierung aufgrund des zusätzlichen Massenanteils von Cobalt eine höhere Flächenbeladung aufweist. So kann beispielsweise eine Pt-Co-Legierung ein Verhältnis von 1:1 hinsichtlich der Gewichtsanteile für Platin und Cobalt aufweisen, sodass durch eine Flächenbeladung der Legierung PtCo 0,2 mg/cm² zu einer Flächenbeladung des Platins von 0,1 mg/cm² führt.

Die genannten bevorzugten Flächenbeladung für Platin verdeutlichen, dass vorteilhaft eine zuverlässige Katalyse während des Betriebes der Brennstoffzelle gewährleistet werden kann, auch wenn im Vergleich zum Stand der Technik geringe Platinanteile eingesetzt werden. Hierdurch werden vorteilhaft Kosten für die Bereitstellung von Platin eingespart. Mithin zeichnet sich die Brennstoffzelle des erfindungsgemäßen Kontextes durch eine erhebliche Wirtschaftseffizienz aus.

In einer weiteren bevorzugten Ausführungsform ist die Brennstoffzelle dadurch gekennzeichnet, dass die Anode eine Dicke aufweist von 0,1 - 10 µm, bevorzugt von 1 - 10 µm, besonders bevorzugt von 2 - 8 µm, ganz besonders bevorzugt von 3 - 6 µm.

Die genannten bevorzugten Dicken sind dahingehend von Vorteil, dass ein besonders effizienter Stromtransport begünstigt wird, welcher bei deutlich dünneren elektrisch leitfähigen Strukturen schwieriger zu realisieren ist. Auch für die Stabilität haben sich die genannten bevorzugten Dicken für die Anode als vorteilhaft erwiesen.

In einer weiteren bevorzugten Ausführungsform ist die Brennstoffzelle dadurch gekennzeichnet, dass die Anode ein Additiv aufweist, wobei bevorzugt das Additiv ein Leitfähigkeitsadditiv, Benetzungsadditiv-, Dispergieradditiv und/oder ein Schutzmaterial umfasst.

Das Additiv bezeichnet im erfindungsgemäßen Kontext einen weiteren Zusatzstoff in der Anode, um eine Funktionalität einzustellen oder weitere, wünschenswerte Effekte zu verstärken oder zu erzielen.

Ein Leitfähigkeitsadditiv dient insbesondere der Erhöhung der elektrischen Leitfähigkeit. Ein bekanntes Beispiel für ein Material für das Leitfähigkeitsadditiv ist Kohlenstoff. Ein Leitfähigkeitsadditiv kann beispielsweise auch durch eine Dotierung bereitgestellt werden. Der durchschnittliche Fachmann ist in der Lage, ein geeignetes Leitfähigkeitsadditiv auszusuchen und in die Anode in Abhängigkeit des Anwendungsfalles einzufügen.

Ein Benetzungsadditiv ermöglicht eine vorteilhaftere Verteilung des katalytisch aktiven Materials, um die katalytisch aktive Fläche zu erhöhen. Dies kann beispielsweise durch eine Verringerung der Oberflächenenergie oder Oberflächenspannung im Rahmen der Aufbringung des katalytisch aktiven Materials als Flüssigkeit bereitgestellt werden. Ein Beispiel für ein Benetzungsadditiv ist Polysiloxan.

Ein Dispergieradditiv (synonym auch Dipergiermittel oder Dipergator) dient insbesondere der der optimalen Durchmischung von zwei eigentlich nicht mischbaren Phasen. Im Kontext der Erfindung kann dies insbesondere im Hinblick auf die Bereitstellung der Anode und/oder einer Katalysatortinte hilfreich sein, welche auf ein Substrat zur Bereitstellung der Anode aufgebracht wird.

Ein Schutzmaterial (synonym auch Schutzschicht) bezeichnet vorzugsweise eine zusätzlich aufgebrachte Schicht mit einer Schutzwirkung, insbesondere für das katalytisch aktive Material. Vorteilhafterweise kann die Aufbringung einer Schutzschicht die Langlebigkeit des katalytisch aktiven Materials zugunsten höherer Stromdichten und weniger negativem Einfluss gegenüber der Belegung mit lonomeren erhöhen. Eine Schutzschicht kann beispielsweise als Material korrosionsstabile Schichten wie Metalloxide oder Metallnitride oder Kohlenstoff (Graphit, Graphen, etc.) umfassen. Diese können insbesondere als Schutzschicht zwischen dem katalytisch aktiven Material und dem lonomer fungieren.

In einer weiteren bevorzugten Ausführungsform ist die Brennstoffzelle dadurch gekennzeichnet, dass das Trägermaterial Kohlenstoff umfasst, wobei bevorzugt der Kohlenstoff als Graphit, Kohlenstoff-Nanoröhrchen, Kohlenstoff-Nanofasern, Aerogel-Kohlenstoff, partiell graphitisierter, "high surface area"-Kohlenstoff und/oder mesoporöser Kohlenstoff vorliegt.

Der Einsatz von Kohlenstoff als Trägermaterial hat sich bewährt, sodass das Trägermaterial umfassend Kohlenstoff besonders einfach und mit bekannten Mitteln bereitgestellt werden kann, sodass diesbezüglich kein oder ein nur geringer Aufwand notwendig ist.

Graphit bezeichnet bevorzugt eine Modifikation von Kohlenstoff. Graphit ist bekannt dafür, dass es eine Schichtstruktur umfassend mehrere Schichten aufweist. In einer Schicht ist jedes Kohlenstoffatom an drei anderen Kohlenstoffatomen gebunden, so dass sich ein zweidimensionales Netzwerk aus Sechsecken von Kohlenstoffatomen ergibt. Für diese (kovalenten) Bindungen gibt jedes Kohlenstoffatom drei seiner vier Valenzelektronen ab. Die "vierten" Valenzelektronen bauen ein über die ganze Schicht reichendes delokalisiertes (aromatisches) sogenannten Pi-Elektronensystem auf. Diese Elektronen sind innerhalb der Schicht frei beweglich, so dass Graphit parallel zu den Kohlenstoffschichten eine hohe elektrische Leitfähigkeit aufweist. Hierdurch können die Stromausbeuten der Brennstoffzelle weiter verbessert werden.

Kohlenstoff-Nanoröhren bezeichnen Röhre umfassend Kohlenstoff, die eine Dimensionierung im Nano- oder Mikrometerbereich aufweisen. Ein Kohlenstoff-Nanorohr umfasst bevorzugt wabenartigen Gittern von Kohlenstoffatomen, ähnlich der Struktur von Graphit. Ein Kohlenstoff-Nanorohr kann bevorzugt einen Durchmesser aufweisen von 0,1 nm - 50 nm. Ein Kohlenstoff-Nanorohr kann bevorzugt einwandig oder mehrwandig ausgebildet sein. Ferner kann ein Kohlenstoff-Nanorohr bevorzugt offen oder geschlossen (mit einer Deckelstruktur) sein. Ferner kann bevorzugt ein Kohlenstoff-Nanorohr leer oder gefüllt sein. Ein Kohlenstoff-Nanorohr weist vorteilhaft eine hohe elektrische Leitfähigkeit und eine besonders ausgeprägte Stabilität auf.

Kohlenstoffnanofasern bezeichnen bevorzugt lange, faserartige Kohlenstoffschichten, in denen die einzelnen Lagen quer zur Faserrichtung angeordnet sind (*platelet-type*) oder winklig ineinander geschachtelt (*herringbone-type*) vorliegen. Sie haben ein ähnlich großes Aspektverhältnis (Verhältnis von Länge zu Durchmesser) wie die Kohlenstoff-Nanoröhre, sind aber mit einem Durchmesser im Bereich von bevorzugt 150-300 nm deutlich größer. Wegen ihrer unregelmäßigen Oberflächenstruktur mit einer Vielzahl von Ecken und Kanten sind die Kohlenstoffnanofasern besonders vorteilhaft für eine schnelle Adsorption und/oder Desorption des katalytisch aktiven Materials, sodass eine besonders langanhaltende Bindung erreicht werden kann.

Ein Kohlenstoff-Aerogel, d. h. ein Aerogel, das das auf Kohlenstoff basiert, bezeichnet bevorzugt einen porösen Festkörper, wobei die bis zu 95 % des Volumens des Festkörpers durch Poren vorliegen. Hierdurch wird eine umfassende Oberfläche des Trägermaterials gebildet, an die das katalytisch aktive Material verteilt aufgebracht werden kann.

Ein "high surface area"-Kohlenstoff bezeichnet bevorzugt einen Kohlenstoff, der eine Oberfläche von 100 - 1 500 m²/g, bevorzugt von 100 - 1 000 m²/g aufweist. Ein "high surface area"-Kohlenstoff weist vorteilhaft ebenfalls eine besonders hohe Adsorptionsfähigkeit auf, sodass eine besonders feste Verbindung mit dem katalytisch aktiven Material ermöglicht werden kann, die auch hohen Drücken, starken Strömungen und/oder hohen Temperaturen standhalten kann. Ketjenblack ist ein Beispiel eines "high surface area"-Kohlenstoff, der sich für den Einsatz im erfindungsgemäßen Kontext als zuverlässig erwiesen hat.

Mesoporöser Kohlenstoff bezeichnet einen Kohlenstoff, der eine kontrollierte Porenstruktur aufweist, deren Poren einen Durchmesser von 2 nm - 50 nm besitzen. Die Porenstruktur eignet sich besonders gut, um als Host-Matrix für Katalysatorpartikel zu fungieren. Die mesoporöse Struktur kann in einem Kohlenstofffilm bereitgestellt werden oder in sphärisch ausgebildeten Kohlenstoffpartikeln, beispielsweise bei Kugelstoffkugeln, die die Mesoporen aufweisen.

Die erfindungsgemäßen Aspekte sollen im Folgenden anhand von Figuren beispielhaft beschrieben werden, ohne auf die Beispiele beschränkt zu sein.

### Figuren und Beispiele

Um den Einfluss der Verwendung einer Platin-Übergangsmetall-Legierung auf die Leistungsfähigkeit einer kohlenstofffreien Brennstoffzelle zu bestimmen, wurden verschiedene Membran-Elektroden-Einheiten bereitgestellt. Diese wurde im Hinblick auf Ihre Leistungsfähigkeit für den Einsatz als Anode in einer Brennstoffzelle ausgemessen. Es wurden insbesondere zwei Referenzproben und zwei erfinderische Proben miteinander verglichen. Die Referenzproben stellen Zusammensetzungen dar, welche auf dem Stand der Technik basieren und dessen katalytisches Material in der Anode Platin ist, während die erfinderischen Proben Zusammensetzungen von bevorzugten Ausführungsformen der Erfindung darstellen, welche insbesondere in der Anode eine Platin-Übergangsmetall-Legierung umfasst.

### Herstellung der Membran Elektroden Einheit (MEA)

Zu Vergleichszwecken wurden zwei Referenzproben bereitgestellt, welche einen bekannten Ansatz im Stand der Technik reflektieren, bei dem analog zu Nguyen et al. (2021) die Anode einen Polymerbinder auf Basis von Kohlenwasserstoff-Ionomeren und Platin als katalytisch aktives Material umfasst.

Alle im folgenden diskutierten Proben (Referenzprobe 1 & 2, Erfinderische Probe 1 & 2) wurden mit einer identischen Kathodenschicht bereitgestellt. Hierzu wurde ein Platin-Katalysator auf Kohlenstoffträger (Pt/C) in einer Wasser/Alkohol-Mischung dispergiert und mit PFSA-basiertem lonomer (3M-PFSA) gemischt. Ähnliche Ergebnisse können auch durch ein alternatives PFSAbasiertes lonomer wie z.B. Nation, Aquivion o. ä. erzielt werden. Diese Dispersion wurde mittels Ultraschall homogenisiert und auf eine Seite der (kohlenwasserstoff-basierten) Membran aufgebracht. Eine Flächenbeladung von 0.4 mg^{Pt}/cm² wurde eingestellt.

Die Referenzproben wurden bereitgestellt, indem für die Anode Platin als katalytisch aktives Material auf Kohlenstoff als einem Trägermaterial aufgebracht wurde. Dies wurde mit einem niedrigsiedenden polaren Lösungsmittel, wie Methanol (MeOH), Ethanol (EtOH), Isopropylalkohol (IPA), Wasser und einer lonomerlösung (z. B. Pemion^{®}, HNN8, lonomr Innovations, Kanada) in IPA und Wasser im Verhältnis 1:1 w/w gemischt. Dadurch wurde eine Tinte gebildet, die auf die zweite Seite einer kohlenwasserstoffbasierten Membran aufgebracht wurde, um die vollständige MEA zu bilden. Die kohlenwasserstoffbasierte Membran umfasst Pemion^{®}, HLF-8, lonomr Innovations, Kanada.

Für die Referenzproben wurden zwei Beladungen von Platin als katalytisch aktivem Material in der Anodenschicht bereitgestellt:
**Referenzprobe 1** - **Pt 0.1 mg/cm²**
**Referenzprobe 2** - **Pt 0.2 mg/cm²**

Des Weiteren wurden zwei MEAs als erfinderische Proben bereitgestellt, die in der Anodenschicht eine Platin-Übergangsmetall-Legierung umfassen. Die erfinderischen Proben umfassen:
**Erfinderische Probe 1** - **PtCo 0.1 mg/cm²**
**Erfinderische Probe 2** - **PtRu 0.1 mg/cm²**

Die erfinderische Probe 1 wurde derart bereitgestellt, dass für die Anodenschicht Platin-Cobalt (PtCO) auf Kohlenstoff als Trägermaterial aufgebracht wurde mit 50 wt% PtCo. Dies wird mit einem niedrigsiedenden polaren Lösungsmittel, wie Methanol (MeOH), Ethanol (EtOH), Isopropylalkohol (IPA), Wasser und einer lonomerlösung (z. B. Pemion^{®}, HNN8, lonomr Innovations, Kanada in IPA und Wasser im Verhältnis 1:1 w/w gemischt. Dadurch bildet sich eine Tinte, die auf eine kohlenwasserstoffbasierte Membran aufgebracht. Die kohlenwasserstoffbasierte Membran umfasst Pemion^{®}, HLF-8, lonomr Innovations, Kanada.

Die erfinderische Probe 2 wurde analog bereitgestellt. Für die Anodenschicht wurde Platin-Ruthenium (PtRu) mit 40 wt % Pt und 20 wt% Ru auf Kohlenstoff als Trägermaterial aufgebracht. Dieses wird ebenfalls mit einem niedrigsiedenden polaren Lösungsmittel, wie Methanol (MeOH), Ethanol (EtOH), Isopropylalkohol (IPA), Wasser und einer lonomerlösung (z. B. Pemion^{®}, HNN8, lonomr Innovations, Kanada in IPA und Wasser im Verhältnis 1:1 w/w gemischt, um eine Tine zu erhalten. Die erhaltene Tinte wird auf eine HC-basierte Membran (Pemion^{®}, HLF-8, lonomr Innovations, Kanada) aufgetragen.

### Messverfahren zur Bestimmung der Leistungsfähigkeit der jeweiligen Membran Elektroden Einheiten (MEA)

Für die Referenzproben 1 und 2 wurden jeweils einerseits eine Kennlinie aufgenommen (oberer Abschnitt der Fig. 1), bei der die elektrische Spannung gegen die Stromdichte aufgetragen ist. Des Weiteren wurden bei den Referenzproben 1 und 2 auch der Hochfrequenzwiderstand gemessen, der ebenfalls gegen die Stromdichte aufgetragen wurde. Die gleichen Messungen wurden auch für die erfinderische Probe 1 und die erfinderische Probe 2 ausgeführt.

Bei der für die Messungen durchgeführten Impedanzspektroskopie wird ein Wechselstromwiderstand (Impedanz) in Abhängigkeit von der Frequenz gemessen. Die Informationen, die man aus der Impedanzspektroskopie gewinnen kann, beruhen darauf, dass verschiedenen Vorgänge im untersuchten System unterschiedliche Zeitkonstanten besitzen, sodass eine periodische Anregung in verschiedenen Frequenzbereichen unterschiedliche messbare Reaktionen des Systems hervorruft. Der Hochfrequenzwiderstand umfasst, vorzugsweise als eine Summe, eine lonenleitfähigkeit der Polymermembran, und eine Elektronenleitfähigkeit der Brennstoffzelle. Während bevorzugt die Elektronenleitfähigkeit als konstant angesehen werden kann, ist die lonenleitfähigkeit, beispielsweise die Protonenleitfähigkeit, der Polymermembran veränderlich und in erster Linie abhängig vom Wassergehalt bzw. von der Feuchtigkeit der Brennstoffzelle. Da die elektrischen Widerstände klein gegenüber dem Elektrolytwiderstand sind, ist der Hochfrequenzwiderstand im Wesentlichen durch die Polymermembranleitfähigkeit gegeben. Insbesondere kann der Hochfrequenzwiderstand gegen den Strom und/oder gegen die Stromdichte aufgetragen werden, um Informationen bzgl. der Leistungsfähigkeit der Brennstoffzelle zu erhalten. Letzteres wird in Fig. 1 dargestellt (siehe Fig. 1, unterer Abschnitt, vorliegend die Stromdichte).

Ferner wird auch eine Kennlinie für alle Proben aufgenommen, d. h. eine Spannung wird, welche gegen den Strom und/oder die Stromdichte aufgetragen ist (siehe Fig. 1, oberer Abschnitt). Dabei ist zu festzustellen, inwieweit die sich ergebende Stromdichte zur Spannung in der Brennstoffzelle verhält bzw. wie der Zusammenhang zwischen der Spannung und der Stromdichte ist.

Die Messungen wurden ausgeführt bei einer Temperatur von ca. 95 °C, einer relativen Feuchte zwischen Anode / Kathode von 35% / 50 % und einem Absolutdruck von 250 kPa (Kilopascal).

### Kurzbeschreibung der Figuren

- **Fig. 1**: Messung von Stromdichten und Spannungen zum Vergleich einer erfindungsgemäßen Brennstoffzelle mit einer Brennstoffzelle aus dem Stand der Technik

### Detaillierte Beschreibung der Figuren

In Fig. 1 werden die aufgenommenen Messergebnisse dargestellt, insbesondere um einen Vergleich zwischen den erfinderischen Proben 1 und 2 und den Referenzproben 1 und 2 vornehmen zu können.

Folgende Kurvenverläufe sind in der Fig. 1 zu erkennen:
Kurve mit kreisförmigen Messpunkten - Referenzprobe 1
Kurve mit dreiecksförmigen Messpunkten (Dreiecksspitze nach unten) - Referenzprobe 2
Kurve mit rautenförmigen Messpunkten - Erfinderische Probe 1
Kurve mit dreieckigsförmigen Messpunkten (Dreiecksspitze nach oben) - Erfinderische Probe 2

Die Referenzprobe 1 und die erfinderischen Probe 1 und erfinderische Probe 2 besitzen die gleiche Beladung an Platin, d. h. jeweils eine Flächenbeladung von 0,1 mg/cm². Es ist festzustellen, dass sowohl die erfinderische Probe 1 als auch die erfinderische Probe 2 höhere Stromdichten als die Referenzprobe 1 erzielen kann (siehe Fig. 1, unterer Abschnitt). Insbesondere ist auch der Hochfrequenzwiderstand der erfinderischen Proben 1 und 2 geringer als die Referenzprobe 1. Eine Verringerung des Hochfrequenzwiderstandes ist ein entscheidender Indikator in Bezug auf die Leistungsfähigkeit.

Im Bereich niedriger Stromdichten haben die Referenzproben 1 und die erfinderischen Proben 1 und 2 einen nahezu identischen Verlauf. Im Bereich mittlerer Stromdichten ist zu erkennen, dass die Spannung der Referenzprobe 1 stärker abnimmt als die erfinderischen Proben 1 und 2. Demzufolge zeigt auch die Kennlinie (oberer Abschnitt der Fig. 1) einen erweiterten Bereich hinsichtlich der Betriebstauglichkeit für die erfinderischen Proben 1 und 2 als die Referenzprobe 1. Mithin zeigen die erfinderischen Proben 1 und 2 einen erweiterten Spannungsbereich, in dem ein Betrieb der Brennstoffzelle möglich ist. Demzufolge zeigen die Daten, dass bei gleicher Beladung von Platin in der Platin-Cobalt-Legierung bzw. Platin-Ruthenium-Legierung eine verbesserte Leistung für die Brennstoffzelle resultiert.

Die Referenzprobe 2 und die erfinderischen Probe 1 und erfinderische Probe 2 besitzen hingegen eine unterschiedliche Beladung an Platin. Die Referenzprobe 2 besitzt eine Flächenbeladung von Platin von 0,2 mg/cm², während die Referenzproben weiterhin eine Flächenbeladung von Platin 0,1 mg/cm² aufweisen. Es ist festzustellen, dass obwohl die erfinderischen Proben die Hälfte der Platinbeladung im Vergleich zur Referenzprobe 2 besitzen, im Wesentlichen gleiche Leistungen für die Brennstoffzelle erreicht werden können.

So haben die Kurven für die erfinderischen Proben 1 und 2 und jene der Referenzprobe 2 einen im Wesentlichen ähnlichen Verlauf. Dies trifft sowohl für die Messung der oberen Kennlinie der Spannung ggü. Der Stromdichte als auch des unteren Hochfrequenzwiderstandes in Abhängigkeit der Stromdichte zu. Insbesondere ist festzustellen, dass die Kurve für die erfinderische Probe 2, d. h. Platin-Ruthenium, im Wesentlichen gleich zur Referenzprobe 2 in ihrer Kennlinie verläuft. Die erfinderische Probe 1, d. h. Platin-Cobalt, erreicht vorteilhaft einen noch verringerten Abfall der Stromdichte, sodass eine höhere Betriebsspannung und damit ein erweiterter Betriebsbereich gegeben ist. Vorteilhaft kann somit die gleiche oder ähnliche Leistung der Brennstoffzelle bei einer verringerten Beladung von Platin erzielt werden. Infolgedessen kann vorteilhaft eine erhebliche Ressourcen- und Kosteneinsparung erreicht werden.

### Literaturverzeichnis

Nguyen, Hien, et al. "Hydrocarbon-based Pemion™ proton exchange membrane fuel cells with state-of-the-art performance." Sustainable Energy & Fuels 5.14 (2021): 3687-3699.

## Patentansprüche

1. Brennstoffzelle umfassend eine Anode, eine Kathode und eine Polymermembran, die sich zwischen der Anode und der Kathode befindet, wobei die Anode ein katalytisch aktives Material, ein Trägermaterial und einen Polymerbinder umfasst, wobei mittels des Polymerbinders das katalytisch aktive Material mit dem Trägermaterial verbunden ist,
**dadurch gekennzeichnet, dass**
das katalytisch aktive Material eine Platin-M-Legierung umfasst, wobei M ein oder mehrere Übergangsmetalle bezeichnet und der Polymerbinder auf Kohlenwasserstofflonomeren basiert.

2. Brennstoffzelle nach dem vorherigen Anspruch
**dadurch gekennzeichnet, dass**
die kohlenwasserstoffbasierten lonomere frei von perfluorierten Sulfonsäuren sind, vorzugsweise frei von Fluor.

3. Brennstoffzelle nach einem oder mehreren der vorherigen Ansprüche
**dadurch gekennzeichnet, dass**
die kohlenwasserstoffbasierten lonomere eine aromatische Hauptkette und/oder eine aromatische Seitengruppe umfassen.

4. Brennstoffzelle nach einem oder mehreren der vorherigen Ansprüche
**dadurch gekennzeichnet, dass**
der Polymerbinder in einem Anteil von 1 - 30 wt% (des Gesamtgewichts der Anode) vorliegt.

5. Brennstoffzelle nach einem oder mehreren der vorherigen Ansprüche
**dadurch gekennzeichnet, dass**
M ausgewählt ist aus einer Gruppe umfassend Ruthenium, Kupfer, Scandium, Titan, Rhodium, Silber, Gold, Mangan, Cobalt, Nickel, Eisen und Palladium, bevorzugt Ruthenium, Cobalt, Nickel, besonders bevorzugt Cobalt.

6. Brennstoffzelle nach einem oder mehreren der vorherigen Ansprüche
**dadurch gekennzeichnet, dass**
die Pt-M-Legierung in einem molaren Verhältnis Pt:M von 30:1 bis 1:1, bevorzugt von 20:1 bis 1:1, besonders bevorzugt von 10:1 bis 1:1 vorliegt.

7. Brennstoffzelle nach einem oder mehreren vorherigen Ansprüche
**dadurch gekennzeichnet, dass**
die Pt-M-Legierung eine binäre Legierung oder ternäre Legierung umfasst.

8. Brennstoffzelle nach einem oder mehreren der vorherigen Ansprüche
**dadurch gekennzeichnet, dass**
die Polymermembran auf Kohlenwassserstoff-Ionomeren basiert, welche bevorzugt frei von perfluorierten Sulfonsäuren sind, besonders bevorzugt frei von Fluor.

9. Brennstoffzelle nach einem oder mehreren der vorherigen Ansprüche
**dadurch gekennzeichnet, dass**
die Polymermembran eine Protonenaustauschmembran ist.

10. Brennstoffzelle nach einem oder mehreren der vorherigen Ansprüche
**dadurch gekennzeichnet, dass**
die Anode eine Flächenbeladung von Platin von bis zu 0,5 mg/cm², bevorzugt von bis zu 0,2 mg/cm², bis zu 0,1 mg/cm², bis zu 0,08 mg/cm², bis zu 0,05 mg/cm², bis zu 0,02 mg/cm² oder weniger aufweist.

11. Brennstoffzelle nach einem oder mehreren der vorherigen Ansprüche
**dadurch gekennzeichnet, dass**
die Anode eine Dicke aufweist von 0,1 - 10 µm, bevorzugt von 1 - 10 µm, besonders bevorzugt von 2 - 8 µm, ganz besonders bevorzugt von 3 - 6 µm.

12. Brennstoffzelle nach einem oder mehreren der vorherigen Ansprüche
**dadurch gekennzeichnet, dass**
das Trägermaterial Kohlenstoff umfasst, wobei bevorzugt der Kohlenstoff als Graphit, Kohlenstoff-Nanoröhrchen, Kohlenstoff-Nanofasern, Aerogel-Kohlenstoff, high surface area-Kohlenstoff und/oder mesoporöser Kohlenstoff vorliegt.

13. Brennstoffzelle nach einem oder mehreren der vorherigen Ansprüche
**dadurch gekennzeichnet, dass**
die Anode ein Additiv aufweist, wobei bevorzugt das Additiv ein Leitfähigkeitsadditiv, Benetzungsadditiv, Dispergieradditiv, und/oder ein Schutzmaterial umfasst.
